# EUROPEAN PATENT APPLICATION

(11) **EP 4 603 347 A1**
(43) Date of publication of application: **20.08.2025**
(21) Application number: 24201733.3
(22) Date of filing: 20.09.2024
(51) Int. Cl.: B60T 13/74, F16D 65/18, F16D 121/24, F16D 127/06

(54) **BRAKE ACTUATOR AND BRAKE APPARATUS INCLUDING THE SAME**

(30) Priority: 16.02.2024 KR 20240022834
(71) Applicant: Hyundai Mobis Co., Ltd., Seoul 06141 (KR); INFAC Corporation, Suwon-si, Gyeonggi-do (KR)
(72) Inventor: SHIN, Choong Sik, 16891 Yongin-si, Gyeonggi-do (KR); KIM, Hyun Chul, 16891 Yongin-si, Gyeonggi-do (KR); BOO, Sang Pil, 16891 Yongin-si, Gyeonggi-do (KR); YOON, Bo Ram, 16891 Yongin-si, Gyeonggi-do (KR); JANG, Taek Jin, Suwon-si, Gyeonggi-do (KR); PARK, Jong Hun, Suwon-si, Gyeonggi-do (KR)
(74) Representative: Jung, Minkyu

(57) **Abstract**

Disclosed are a brake actuator (30) and a brake apparatus including the same. The brake actuator (30) includes a case (100), a first motor (200) installed in the case (100), a transfer gear (300) rotatably installed in the case (100) and connected to the first motor (200), a first parking member (400) rotated along with the transfer gear (300), a second motor (500) disposed to be spaced apart from the first motor (200), a second parking member (600) connected to the second motor (500) and configured to limit the rotation of the first parking member (400) as the second parking member (600) is rotated in a first rotation direction, and a support member (700) disposed to face the second parking member (600) and configured to limit a rotation range of the second parking member (600) in a second rotation direction that is opposite to the first rotation direction.

## Description

### BACKGROUND

### FIELD

Exemplary embodiments of the present disclosure relate to a brake actuator and a brake apparatus including the same, and more particularly, to a brake actuator capable of securing stable parking braking performance and a brake apparatus including the same.

### DISCUSSION OF THE BACKGROUND

In general, a brake apparatus for a vehicle is an apparatus that brings a pad and a disk closer to each other by pushing a piston by a driving force and that brakes a vehicle by using a frictional force between the pad and the disk.

Among brake apparatuses, an electro mechanical brake (EMB) is an apparatus that generates a braking force by pressurizing the piston through a mechanism, such as a gear or a screw, by using a motor driving actuator that is directly mounted on a caliper, without using oil pressure. Such an EMB has advantages in that the EMB is capable of additional function implementations, such as an ABS, ESC, a TCS, and AEB, in addition to common parking braking because the EMB is capable of active braking and independent braking for each wheel and can implement higher performance because oil pressure transfer delay is not present.

A conventional EMB secures quick responsiveness and high efficiency of the piston through a ball screw. However, such a ball screw is incapable of self-locking by which self-rotation can be limited due to the nature of its structural characteristic. When the supply of power to a motor is stopped, the conventional EMB has a problem in that a braking force is arbitrarily released by repulsive power of the pad and the piston.

The Background Technology of the present disclosure is disclosed in Korean Patent Application Publication No. 10-2010-0098846 (September 10, 2010 entitled "DISK BRAKE HAVING PARKING FUNCTION").

### SUMMARY

Various embodiments are directed to providing a brake actuator capable of securing stable parking braking performance and a brake apparatus including the same.

In an embodiment, a brake actuator includes a case, a first motor installed in the case, a transfer gear rotatably installed in the case and connected to the first motor, a first parking member rotated along with the transfer gear, a second motor disposed to be spaced apart from the first motor, a second parking member connected to the second motor and configured to limit the rotation of the first parking member as the second parking member is rotated in a first rotation direction, and a support member disposed to face the second parking member and configured to limit a rotation range of the second parking member in a second rotation direction that is opposite to the first rotation direction.

The first parking member may include a first parking body connected to a first output shaft of the first motor and a plurality of extension parts extended from the first parking body and arranged along the circumferential surface of the first parking body.

The extension part may be inclined with respect to a radial direction of the first parking body.

The second parking member may include a second parking body connected to a second output shaft of the second motor and rotated in the first rotation direction or the second rotation direction, a trap member extended from the second parking body and inserted between the extension parts that neighbor each other as the second parking body is rotated in the first rotation direction, and a return member connected to the second parking body and configured to add rotatory power in the second rotation direction to the second parking body.

The return member may add rotatory power in the second rotation direction to the second parking member when the second parking member comes into contact with the support member.

The return member may be provided to be elastically deformable.

The return member may be a torsion spring.

The second parking member may further include a distribution member provided in the second parking body.

The second motor may include a neck part disposed to surround the second output shaft. The distribution member may include a motor boss extended from the second parking body and disposed to surround the neck part.

The distribution member may include a case boss extended from the second parking body and inserted into the case.

The support member may protrude from the case, and may come into contact with the second parking body when the second parking body is rotated at a set angle or more in the second rotation direction.

The end of the support member may have a curved surface shape.

The first parking body may be movably installed in the length direction of the first output shaft. When weight that acts between the extension part and the trap member is a set size or more, the first parking body may be moved in a departure direction parallel to the length direction of the first output shaft.

A side surface of the extension part may be inclined with respect to the length direction of the first output shaft.

The brake actuator may further include a restoration member configured to pressurize the first parking member in a direction opposite to the departure direction.

The restoration member may include a restoration body disposed to face the first parking body and a pressurization member disposed between the restoration body and the first parking body and provided to be elastically deformable.

The pressurization member may be a compression spring.

In an embodiment, a brake apparatus includes a caliper body, a piston unit movably installed in the caliper body and configured to come into contact with or to be separated from the brake pad in a moving direction thereof, and a brake actuator connected to the piston unit and configured to move the piston unit. The brake actuator includes a case, a first motor installed in the case, a transfer gear rotatably installed in the case and connected to the first motor and the piston unit, a first parking member rotated along with the transfer gear, a second motor disposed to be spaced apart from the first motor, a second parking member connected to the second motor and configured to limit the rotation of the first parking member as the second parking member is rotated in a first rotation direction, and a support member disposed to face the second parking member and configured to limit a rotation range of the second parking member in a second rotation direction that is opposite to the first rotation direction.

The brake actuator and the brake apparatus according to an embodiment of the present disclosure can maintain a parking braking force although an operation of the first motor is released upon parking braking by the first parking member and the second parking member.

The brake actuator and the brake apparatus according to an embodiment of the present disclosure can adjust an operation of the second parking body through only on/off control of the second motor because the second parking body can be returned to its initial location by the return member even without the driving of the second motor.

The brake actuator and the brake apparatus according to an embodiment of the present disclosure can reduce the stroke length of the second parking member upon parking braking and increase the utilization of a space, by limiting the rotation range of the second parking member in the second rotation direction by the second support member.

The brake actuator and the brake apparatus according to an embodiment of the present disclosure can prevent damage to the second output shaft by distributing a reaction that occurs between the extension part and the trap member upon parking braking through the distribution member.

The brake actuator and the brake apparatus according to an embodiment of the present disclosure can prevent a loss of the traveling ability of a vehicle by forcedly releasing a braking force by the slant structure of the extension part and the restoration member if the braking force is not smoothly released due to damage to the first parking member and the second parking member or a false operation of the first parking member and the second parking member.

### BRIEF DESCRIPTION OF THE DRAWINGS

FIG. 1 is a perspective view schematically illustrating a construction of a brake apparatus according to an embodiment of the present disclosure.
FIG. 2 is a cross-sectional view schematically illustrating a construction of the brake apparatus according to an embodiment of the present disclosure.
FIG. 3 is a perspective view schematically illustrating a construction of a brake actuator according to an embodiment of the present disclosure.
FIG. 4 is a front view schematically illustrating a construction of the brake actuator according to an embodiment of the present disclosure.
FIG. 5 is a perspective view schematically illustrating a construction of a first parking member and a second parking member according to an embodiment of the present disclosure.
FIG. 6 is a front view schematically illustrating a construction of the first parking member and the second parking member according to an embodiment of the present disclosure.
FIG. 7 is a side view schematically illustrating a construction of the first parking member and the second parking member according to an embodiment of the present disclosure.
FIG. 8 is an enlarged view schematically illustrating a construction of a distribution member according to an embodiment of the present disclosure.
FIG. 9 is an enlarged view illustrating a modified example of the distribution member illustrated in FIG. 8.
FIG. 10 is an enlarged view illustrating another modified example of the distribution member illustrated in FIG. 8.
FIGS. 11 to 13 are diagrams schematically illustrating a process of generating a parking braking force.
FIGS. 14 and 15 are diagrams schematically illustrating a process of releasing a parking braking force.
FIGS. 16 and 17 are diagrams schematically illustrating a process of forcedly releasing a parking braking force.

### DETAILED DESCRIPTION OF THE ILLUSTRATED EMBODIMENTS

Hereinafter, a brake actuator and a brake apparatus including the same according to embodiments of the present disclosure are described with reference to the accompanying drawings.

In this process, the thicknesses of lines or the sizes of components illustrated in the drawings may have been exaggerated for the clarity of a description and for convenience' sake. Terms to be described below have been defined by taking into consideration their functions in the present disclosure, and may be changed depending on a user or operator's intention or practice. Accordingly, such terms should be defined based on the overall contents of this specification.

Furthermore, throughout the specification, when it is described that one part is "connected (or coupled)" to another part, the one part may be "directly connected (or coupled)" to the another part or may be "indirectly connected (or coupled)" to the another part with another member interposed therebetween. When it is said that one component "includes (or comprises)" the other component, this means that the one component may further "include (or comprise)" another component not the exclusion of another component unless explicitly described to the contrary.

Furthermore, throughout this specification, the same reference numerals may denote the same components. Although not mentioned or described in a specific drawing, the same reference numerals or similar reference numerals may be described on the basis of another drawing. Furthermore, although a reference numeral is not indicated in a portion of a specific drawing, the portion may be described on the basis of another drawing. Furthermore, the number, shapes, and sizes of detailed components included in the drawings of this application, a relative difference between the sizes, etc. have been set for convenience of understanding, and do not limit embodiments, and may be implemented in various forms.

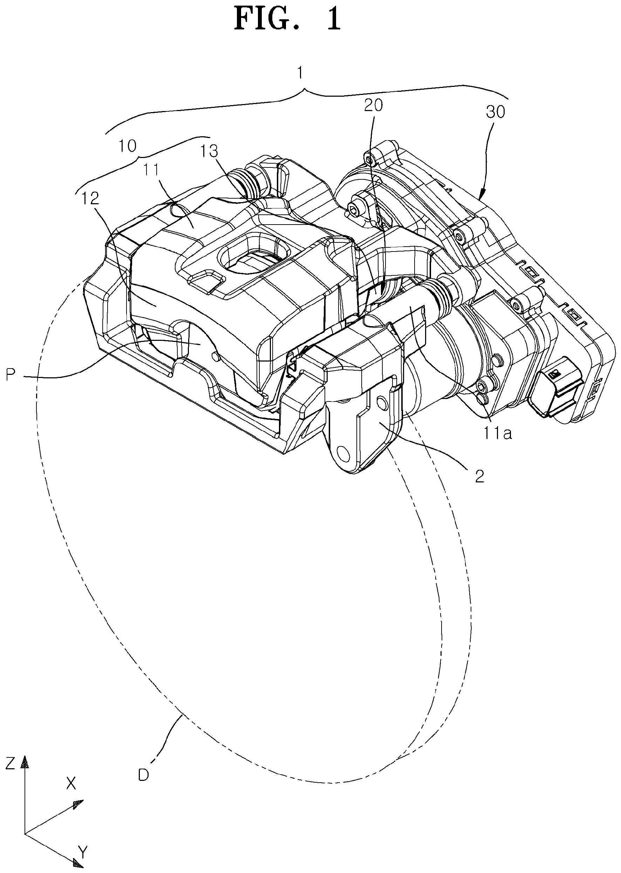

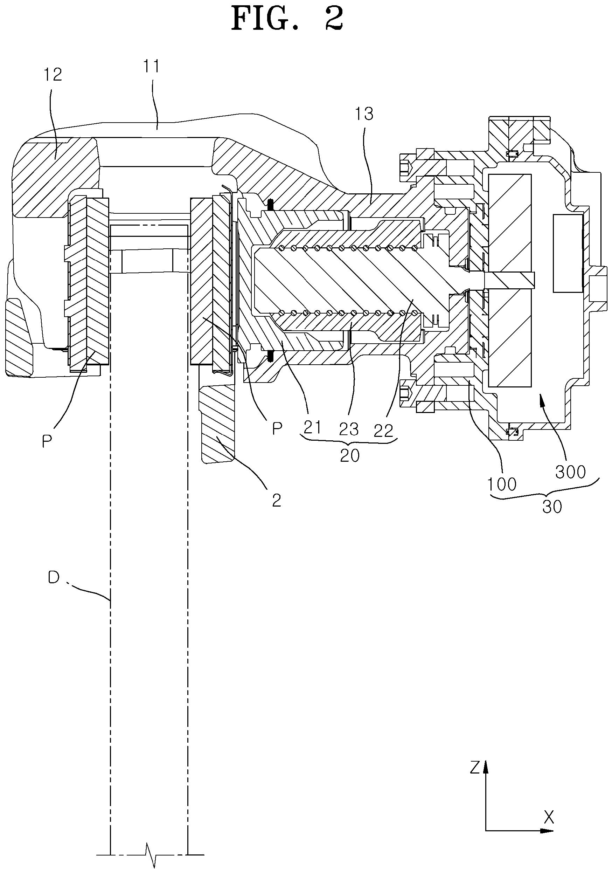

FIG. 1 is a perspective view schematically illustrating a construction of a brake apparatus according to an embodiment of the present disclosure. FIG. 2 is a cross-sectional view schematically illustrating a construction of the brake apparatus according to an embodiment of the present disclosure.

Referring to FIGS. 1 and 2, a brake apparatus 1 according to the present embodiment includes a caliper body 10, a piston unit 20, and a brake actuator 30.

The caliper body 10 forms a schematic appearance of the brake apparatus, and may generally support the piston unit 20 and the brake actuator 30.

The caliper body 10 according to the present embodiment may include a bridge 11, a finger 12, and a cylinder 13.

The bridge 11 forms an appearance of a central part of the caliper body 10, and may support the finger 12 and the cylinder 13. The bottom of the bridge 11 may be disposed to face the circumferential surface of a brake disk D by being spaced apart from the circumferential surface of the brake disk D at a predetermined interval. Both sides of the bridge 11 may be extended in opposite directions in a direction (i.e., an X axis direction in FIG. 1) parallel to the central axis of the brake disk D. A detailed shape of the bridge 11 is not limited to the shape illustrated in FIGS. 1 and 2, and the design of the bridge 11 may be changed in various shapes.

A pair of brake pads P may be disposed under the bridge 11. The pair of brake pads P may be spaced apart from each other along the central axis of the brake disk D. The pair of brake pads P may be disposed to face each other with the brake disk D interposed therebetween. The pair of brake pads P may be supported by a carrier 2 or the bridge 11 so that the pair of brake pads P can slide and move in the direction parallel to the central axis of the brake disk D. A friction pad including a material having a high friction coefficient, such as rubber, may be attached to one surface of the brake pad P, which faces the brake disk D.

The bridge 11 may be movably connected to the carrier 2 that is fixed to a knuckle (not illustrated) through the medium of a guide rod 11a. The bridge 11 may slide and move in the direction parallel to the central axis of the brake disk D by a reaction that is generated between the brake pad P and the piston unit 20 upon braking of a vehicle.

The finger 12 may be downward extended from one side of the bridge 11. The finger 12 may be integrally connected to the bridge 11 by welding, press processing, or bending processing. The finger 12 may be disposed to face any one of the pair of brake pads P. The finger 12 may pressurize any one of the pair of brake pads P toward the brake disk D or release the pressurization of any one of the pair of brake pads P, by the slide and movement of the bridge 11.

The cylinder 13 may be downward extended from the other side of the bridge 11. The cylinder 13 may be formed to have a cylindrical shape having an inside emptied and one side opened. The central axis of the cylinder 13 may be disposed in parallel to the central axis of the brake disk D. The opened side of the cylinder 13 may be disposed to face the other of the pair of brake pads P.

The piston unit 20 may be movably installed in the caliper body 10. The piston unit 20 may come into contact with the other of the pair of brake pads P or may be separated from the other of the pair of brake pads P in a moving direction thereof. When coming into contact with the brake pad P, the piston unit 20 may pressurize the brake pad P toward the brake disk D. The brake pad P is brought closer to the brake disk D, and may apply a braking force to a vehicle. When being separated from the brake pad P, the piston unit 20 may release pressure that is applied to the brake pad P. The brake pad P is separated from the brake disk D, and may release a braking force applied to the vehicle.

The piston unit 20 may include a piston 21, a bolt screw 22, and a nut screw 23.

The piston 21 may be formed to have a cup shape having one side opened. A closed side of the piston 21 may be disposed toward the brake pad P that is disposed to face the cylinder 13. The opened side of the piston 21 may be disposed toward an internal space of the cylinder 13. The outside of the piston 21 may be supported by the inside of the cylinder 13 so that the piston 21 can slide and move thereon. On the contrary, the outside of the piston 21 may form a gap by being spaced apart from the inside of the cylinder 13 at a predetermined distance.

The piston 21 may be moved to advance and retreat in a direction (i.e., a direction parallel to the X axis in FIG. 1) parallel to the central axis of the cylinder 13. The piston 21 protrudes toward the outside of the cylinder 13 upon an advance movement, and may pressurize the brake pad P that is disposed to face the cylinder 13 toward the brake disk D. In this case, the bridge 11 may be moved in a direction opposite to the moving direction of the piston 21 by a reaction that is generated between the piston 21 and the brake pad P. Upon a retreat movement, the piston 21 releases pressure that is applied to the brake pad P, and may separate the brake pad P from the brake disk D.

The bolt screw 22 is disposed within the cylinder 13, and may be rotated by a driving force that is applied by the brake actuator 30.

For example, the bolt screw 22 may be formed to have a pole shape having approximately a circular cross section. The bolt screw 22 is disposed within the cylinder 13, and may have a central axis disposed on the same axis as the central axis of the cylinder 13. One end of the bolt screw 22 may be disposed to face the end of the inside of the piston 21 by being spaced apart from the end of the inside of the piston 21 at a predetermined interval. The other end of the bolt screw 22 penetrates the closed side of the cylinder 13, and may protrude to the outside of the caliper body 10. When the brake actuator 30 operates, the bolt screw 22 may be rotated clockwise or counterclockwise around the central axis thereof.

A groove in which the circumference of an electric body having a spherical shape on one side thereof is seated may be formed in the outer circumferential surface of the bolt screw 22. The groove is extended in a spiral shape in the length direction of the bolt screw 22, and may provide the circulation path of the electric body.

The nut screw 23 is disposed within the cylinder 13, and may be connected to the bolt screw 22. The nut screw 23 may be moved to reciprocate in a straight line in a direction parallel to the length direction of the bolt screw 22 within the cylinder 13 in conjunction with the rotation of the bolt screw 22. The nut screw 23 may pressurize the piston 21 toward the brake pad P or release the pressurization of the piston 21 in the moving direction thereof.

For example, the nut screw 23 may be formed to have a cylindrical shape having a hollow shape. The inner circumferential surface of the nut screw 23 may be disposed to face the outer circumferential surface of the bolt screw 22 by being spaced apart from the outer circumferential surface of the bolt screw 22 at a predetermined interval. A groove in which the circumference of the electric body on the other side thereof is seated may be formed in the inner circumferential surface of the nut screw 23. The groove is extended in a spiral shape in the length direction of the nut screw 23, and may provide the circulation path of the electric body.

The nut screw 23 may receive rotatory power of the bolt screw 22 through the medium of the electric body. When the bolt screw 22 is rotated, the nut screw 23 may be moved to advance and retreat in the length direction of the bolt screw 22 by the circulation movement of the electric body.

Upon an advance movement, the nut screw 23 comes into contact with the inside of the piston 21, and may pressurize the piston 21 toward the brake disk D. Upon a retreat movement, the nut screw 23 is separated from the inside of the piston 21, and may release pressure that is applied to the piston 21.

The brake actuator 30 is connected to the piston unit 20, and may move the piston unit 20. That is, the brake actuator 30 may function as a component that generates a driving force for applying a braking force to a vehicle or releasing the braking force and that transfers a generated driving force to the piston unit 20.

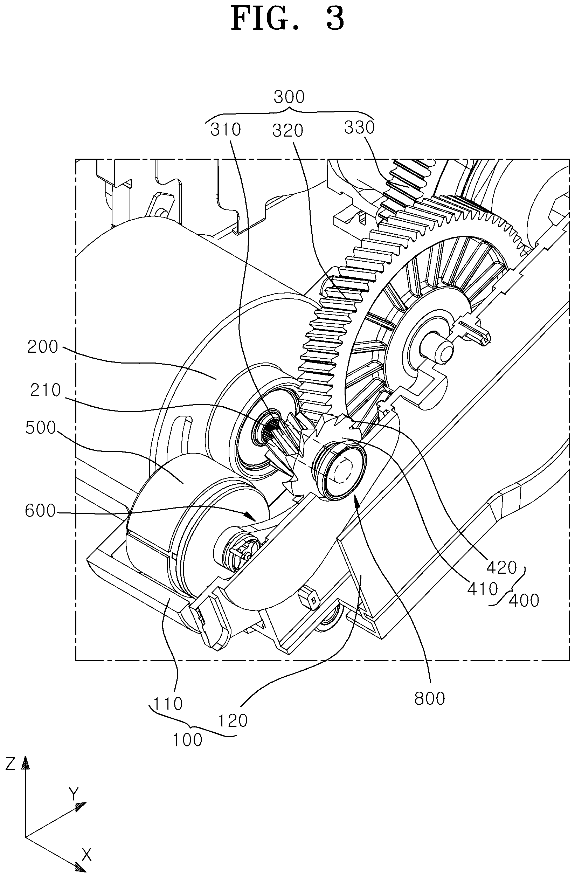

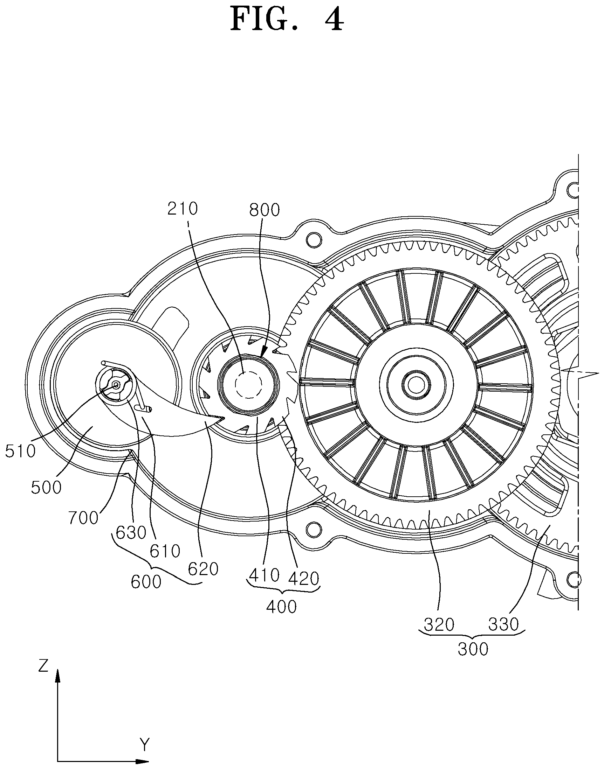

FIG. 3 is a perspective view schematically illustrating a construction of a brake actuator according to an embodiment of the present disclosure. FIG. 4 is a front view schematically illustrating a construction of the brake actuator according to an embodiment of the present disclosure.

Referring to FIGS. 3 and 4, a brake actuator 30 according to the present embodiment includes a case 100, a first motor 200, a transfer gear 300, a first parking member 400, a second motor 500, a second parking member 600, and a support member 700.

The case 100 is fixed to the caliper body 10, and may generally support the first motor 200, the transfer gear 300, the first parking member 400, the second motor 500, and the second parking member 600.

The case 100 may include a case body 110 and a case cover 120.

The case body 110 may be formed to have a barrel shape having an inside emptied and one side opened. A closed side of the case body 110 may be disposed to face a rear surface of the cylinder 13. The case body 110 may be fixed to the rear surface of the cylinder 13 by various types of coupling methods, such as bolting, welding, and fitted coupling. A cross section shape of the case body 110 is not limited to the shape illustrated in FIGS. 3 and 4, and the design of the cross section shape may be changed in various shapes.

The case cover 120 is disposed to face the case body 110, and may close an internal space of the case body 110. The case cover 120 is formed to have approximately a plate shape, and may be disposed to face the opened side of the case body 110. The case cover 120 may be fixed to the opened side of the case body 110 by various types of coupling methods, such as bolting, welding, and fitted coupling. A cross section shape of the case cover 120 may be formed to correspond to the cross section shape of the case body 110.

The first motor 200 is installed in the case 100, and generates rotatory power for moving the piston unit 20. For example, the first motor 200 may be exemplified as various types of electric motors which may rotate a first output shaft 210 by receiving power from the outside. The first motor 200 may be fixed to the outside of the case body 110 by various types of coupling methods, such as bolting, welding, and fitted coupling. The first output shaft 210 penetrates the case body 110, and may protrude into the internal space of the case body 110. The length direction of the first output shaft 210 may be parallel to the length direction of the cylinder 13 and the bolt screw 22, for example, an X axis in FIG. 3. The first motor 200 is electrically connected to the battery of a vehicle, and may be supplied with power therefrom.

The transfer gear 300 may be rotatably installed in the case 100. The transfer gear 300 is connected to the first motor 200, and is rotated in conjunction with rotatory power that is generated by the first motor 200. The transfer gear 300 may function as a component that transfers, to the piston unit 20, the rotatory power that is generated by the first motor 200.

The transfer gear 300 may include a first transfer gear 310, a second transfer gear 320, and a third transfer gear 330.

The first transfer gear 310 may be connected to the first output shaft 210 of the first motor 200. For example, the first transfer gear 310 may be exemplified as a helical gear or spur gear having a hollow shape in which a tooth shape has been formed in the outer circumferential surface thereof. The central axis of the first transfer gear 310 may be disposed on the same axis as the central axis of the first output shaft 210 of the first motor 200. The inner circumferential surface of the first transfer gear 310 may be spline-coupled to the outer circumferential surface of the first output shaft 210. Accordingly, when the first motor 200 operates, the first transfer gear 310 may be rotated at the same angular speed as the first output shaft 210.

The second transfer gear 320 is engaged and coupled to the first transfer gear 310, and may be rotated in conjunction with the rotation of the first transfer gear 310. For example, the second transfer gear 320 may be exemplified as a helical gear or spur gear having a hollow shape in which a tooth shape has been formed in the outer circumferential surface thereof. The central axis of the second transfer gear 320 may be disposed in parallel to the central axis of the first transfer gear 310. The second transfer gear 320 may be rotatably supported by a separate shaft (not illustrated) around its central axis within the case 100. The outer circumferential surface of the second transfer gear 320 may be engaged and coupled to the outer circumferential surface of the first transfer gear 310. When the first transfer gear 310 is rotated, the second transfer gear 320 may be rotated in a direction opposite to the direction of the first transfer gear 310. The diameter of the second transfer gear 320 may be greater than the diameter of the first transfer gear 310. Accordingly, the second transfer gear 320 may amplify the size of rotatory power that is transferred by the first transfer gear 310.

The third transfer gear 330 is engaged and coupled to the second transfer gear 320, and may be rotated in conjunction with the rotation of the second transfer gear 320. The third transfer gear 330 may function as a component that that finally transfers, to the piston unit 20, rotatory power that is generated by the first motor 200. For example, the third transfer gear 330 may be exemplified as a helical gear or spur gear having a hollow shape in which a tooth shape has been formed in the outer circumferential surface thereof. The central axis of the third transfer gear 330 may be disposed in parallel to the central axis of the second transfer gear 320. The central axis of the third transfer gear 330 may be placed on the same axis as the central axis of the bolt screw 22 of the piston unit 20. The outer circumferential surface of the third transfer gear 330 may be engaged and coupled to the outer circumferential surface of the second transfer gear 320. The third transfer gear 330 may be rotated in a direction opposite to the direction of the second transfer gear 320 around its central axis when the second transfer gear 320 is rotated. A rear end of the bolt screw 22 that protrudes from the rear surface of the cylinder 13 may be inserted into the central part of the third transfer gear 330. The outer circumferential surface of the bolt screw 22 may be spline-coupled to the inner circumferential surface of the third transfer gear 330. Accordingly, when the third transfer gear 330 is rotated, the bolt screw 22 is rotated along with the third transfer gear 330, and may move the nut screw 23 so that the nut screw 23 is advanced and retreated. The third transfer gear 330 may be formed to have a greater diameter than the second transfer gear 320. Accordingly, when the second transfer gear 320 is rotated, the third transfer gear 330 is rotated at a smaller angular speed than the second transfer gear 320, and may amplify the size of rotatory power that is transferred to the piston unit 20.

When the first output shaft 210 is rotated in a braking application direction, the rotatory power of the first output shaft 210 are sequentially transferred to the first transfer gear 310, the second transfer gear 320, the third transfer gear 330, and the bolt screw 22. The nut screw 23 and the piston 21 are advanced, and may bring the brake pad P closer to the brake disk D.

When the first output shaft 210 is rotated in a braking release direction, the rotatory power of the first output shaft 210 is sequentially transferred to the first transfer gear 310, the second transfer gear 320, the third transfer gear 330, and the bolt screw 220. The nut screw 23 and the piston 21 are retreated, and may separate the brake pad P from the brake disk D.

The first parking member 400 is rotated along with the transfer gear 300, and may function as a component that maintains a parking braking force along with the second parking member 600.

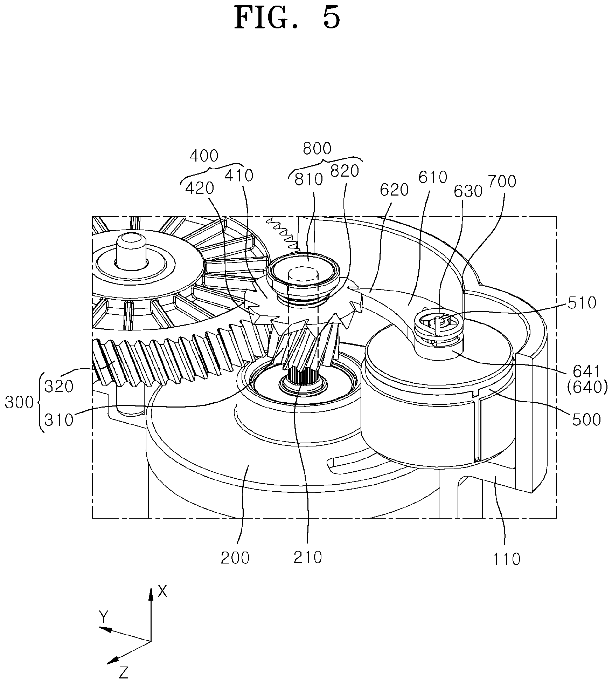

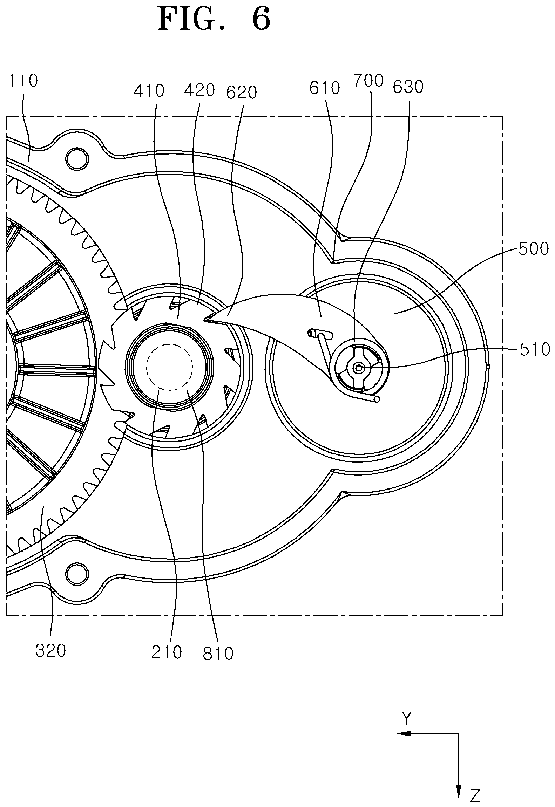

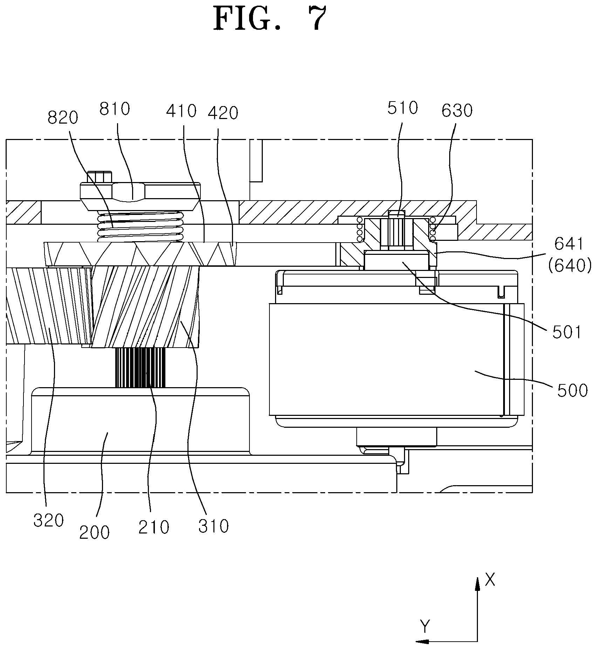

FIG. 5 is a perspective view schematically illustrating a construction of a first parking member and a second parking member according to an embodiment of the present disclosure. FIG. 6 is a front view schematically illustrating a construction of the first parking member and the second parking member according to an embodiment of the present disclosure. FIG. 7 is a side view schematically illustrating a construction of the first parking member and the second parking member according to an embodiment of the present disclosure.

Referring to FIGS. 1 to 7, the first parking member 400 may include a first parking body 410 and an extension part 420.

The first parking body 410 may be connected to the first output shaft 210 of the first motor 200. For example, the first parking body 410 may be formed to have a ring shape in which a hollow has been formed at the central part of the first parking body. The central axis of the first parking body 410 may be placed on the same axis as the central axis of the first output shaft 210. The inner circumferential surface of the first parking body 410 may be spline-coupled to the outer circumferential surface of the first output shaft 210. When the first output shaft 210 is rotated, the first parking body 410 may be rotated at the same angular speed the first output shaft 210 and the first transfer gear 310. Accordingly, the size of weight that is applied to the second parking member 600 can be reduced, compared to a case in which the first parking body 410 is connected to the second transfer gear 320 or the third transfer gear 330 the rotatory power of which is distributed by a gear ratio. When the first output shaft 210 is rotated, the first parking body 410, together with the first output shaft 210, may be rotated in the braking application direction or the braking release direction.

The extension part 420 is extended from the first parking body 410, and may function as a component that forms an interference structure along with the second parking member 600. For example, the extension part 420 may protrude from the circumferential surface of the first parking body 410 to the outside of the first parking body 410. The extension part 420 may be provided in a plural number. The plurality of extension parts 420 may be arranged along the circumferential surface of the first parking body 410 around the central axis of the first parking body 410. An interval between the extension parts 420 that neighbor each other may be identically formed.

The extension part 420 may be inclined with respect to the radial direction of the first parking body 410. For example, the extension part 420 may be slanted in the braking release direction, that is, clockwise in FIG. 6, or extended in a shape in which the extension part has been bent in a spiral line shape, at a set angle from the circumferential surface of the first parking body 410. Accordingly, when the extension part 420 is fastened to the second parking member 600, the extension part 420 may permit the first parking body 410 to be rotated in the braking application direction and also limit the rotation of the first parking body 410 in the braking release direction.

The second motor 500 is installed in the case 100, and generates rotatory power for rotating the second parking member 600. For example, the second motor 500 may be exemplified as various types of electric motors which may rotate a second output shaft 510 by receiving power from the outside. The second motor 500 may be disposed by being spaced apart from the first motor 200. The second motor 500 may be disposed within the case body 110 or may be disposed on the outside of the case body 110. The second motor 500 may be fixed to the case body 110 by various types of coupling methods, such as bolting, welding, and fitted coupling. The second output shaft 510 may be disposed in the internal space of the case body 110. The length direction of the second output shaft 510 may be parallel to the length direction of the first output shaft 210. On the contrary, the length direction of the second output shaft 510 may intersect the length direction of the first output shaft 210. The second motor 500 is electrically connected to the battery of a vehicle, and may be supplied with power therefrom.

The second parking member 600 may be rotatably installed in the case 100. The second parking member 600 may be connected to the second motor 500. The second parking member 600 may be rotated in a first rotation direction and a second rotation direction that are opposite to each other around the second output shaft 510 by receiving rotatory power from the second motor 500. The second parking member 600 may selectively limit the rotation of the first parking member 400 depending on its rotation direction. More specifically, when being rotated in the first rotation direction, the second parking member 600 may limit the rotation of the first parking member 400. Accordingly, the second parking member 600 can prevent the piston unit 20 from losing a parking braking force because the piston unit 20 is arbitrarily separated from the brake pad P although an operation of the first motor 200 is suspended upon parking braking of a vehicle. When being rotated in the second rotation direction, the second parking member 600 may permit the rotation of the first parking member 400. Accordingly, when a vehicle operates normally, the second parking member 600 may enable the parking braking operation of the first motor 200 to be smoothly performed.

The second parking member 600 may include a second parking body 610, a trap member 620, and a return member 630.

The second parking body 610 forms a schematic appearance of the second parking member 600, and may support the trap member 620. The second parking body 610 may be connected to the second output shaft 510. The second parking body 610 may be rotated in the first rotation direction and the second rotation direction in conjunction with the rotation of the second output shaft 510.

For example, the second parking body 610 may be formed to have approximately a pole shape. The second output shaft 510 may be inserted into the second parking body 610. The outer circumferential surface of the second output shaft 510 may be spline-coupled to the inside of the second parking body 610. Accordingly, when the second output shaft 510 is rotated, the second parking body 610 may be rotated in the first rotation direction and the second rotation direction around the second output shaft 510 along with the second output shaft 510. The rotation of the second parking body 610 in the first rotation direction may mean that the second parking body 610 is rotated counterclockwise along with the second output shaft 510 in FIG. 6. The rotation of the second parking body 610 in the second rotation direction may mean that the second parking body 610 is rotated clockwise along with the second output shaft 510 in FIG. 6.

The trap member 620 may be extended from the second parking body 610. The trap member 620 may limit or permit the rotation of the extension part 420 depending on the rotation direction of the second parking body 610.

For example, the trap member 620 may be extended from one end of the second parking body 610. The end of the trap member 620 may be disposed toward the first parking member 400. The length direction of the trap member 620 may be extended to be curved from the one end of the second parking body 610 toward the first parking member 400. The trap member 620 may be inserted into a pair of extension parts 420 that neighbors each other as the second parking body 610 is rotated in the first rotation direction. In this case, the trap member 620 is engaged and coupled to the extension part 420, and may limit the rotation of the first parking body 410. The trap member 620 may fall outside from a pair of extension parts 420 that neighbors each other, as the second parking body 610 is rotated in the second rotation direction. In this case, the trap member 620 is separated from the extension part 420, and may permit the rotation of the first parking body 410.

The trap member 620 may be formed to have a width that is gradually narrowed toward the end thereof. Accordingly, when the second parking body 610 is rotated in the first rotation direction, the trap member 620 can be more easily inserted between a pair of extension parts 420 that neighbors each other.

The return member 630 is connected to the second parking body 610, and may add rotatory power in the second rotation direction to the second parking body 610. The return member 630 may be provided to be elastically deformable. The return member 630 may function as a component that rotates the second parking body 610 in the second rotation direction by its self-elastic restoration force when the trap member 620 is separated from the extension part 420. Accordingly, when parking braking is released, the return member 630 can return the second parking body 610 to its initial angle even without the driving of the second motor 500. Accordingly, the bi-directional rotation of the second parking body 610 can be implemented by only on/off control of the second motor 500.

For example, the return member 630 may be exemplified as a torsion spring capable of storing or discharging rotatory power through its elastic deformation. The central axis of the return member 630 may be placed on the same axis as the central axis of the second output shaft 510. One end of the return member 630 may be connected to the second parking body 610. The other end of the return member 630 may be connected to a part that is fixed when the second parking body 610 is rotated, for example, the case 100 or the second motor 500.

When the trap member 620 is inserted between the pair of extension parts 420 that neighbors each other, the return member 630 may be installed to be compressed or extended in the first rotation direction in its neutral state. Accordingly, when parking braking is released, the return member 630 may separate the trap member 620 from the extension part 420 by always adding rotatory power in the second rotation direction to the second parking body 610.

The second parking member 600 may further include a distribution member 640.

The distribution member 640 may be provided in the second parking body 610. The distribution member 640 may function as a component that distributes weight that is applied to the second output shaft 510 when the extension part 420 and the trap member 620 are trapped and coupled.

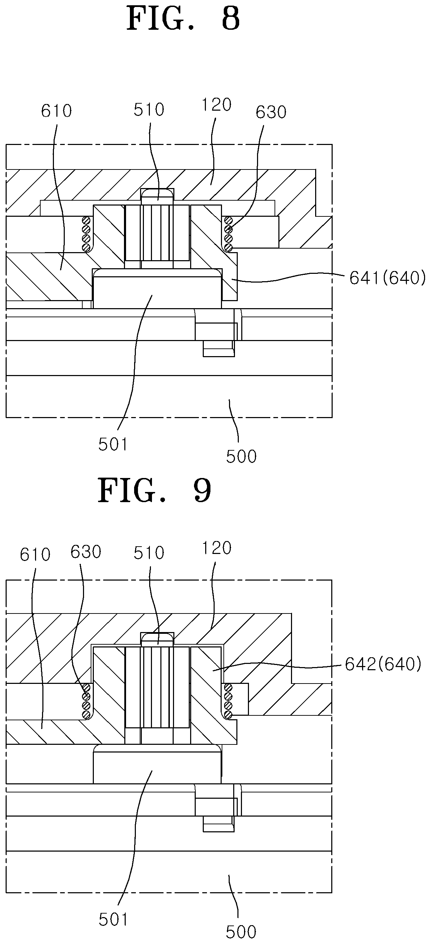

FIG. 8 is an enlarged view schematically illustrating a construction of the distribution member according to an embodiment of the present disclosure.

Referring to FIG. 8, a neck part 501 may be formed in the second motor 500. The neck part 501 may be extended in the length direction of the second output shaft 510 from one surface of the second motor 500. The central axis of the neck part 501 may be placed on the same axis as the central axis of the second output shaft 510. The inner circumferential surface of the neck part 501 may be disposed to surround the outer circumferential surface of the second output shaft 510. The neck part 501 may be formed to have a greater diameter than the second output shaft 510. Accordingly, the neck part 501 may provide a space in which a bush or a bearing may be installed between the neck part 501 and the second output shaft 510.

The distribution member 640 may include a motor boss 641.

The motor boss 641 may be extended from the second parking body 610 toward the second motor 500. The length direction of the motor boss 641 may be parallel to the length direction of the second output shaft 510. The central axis of the motor boss 641 may be placed on the same axis as the central axis of the second output shaft 510. The inner circumferential surface of the motor boss 641 may be disposed to surround the outer circumferential surface of the neck part 501. The inner circumferential surface of the motor boss 641 may come into contact with the outer circumferential surface of the neck part 501. Accordingly, when the extension part 420 and the trap member 620 are trapped and coupled, the motor boss 641 can prevent the bending of the second output shaft 510 or damage to the second output shaft 510 by distributing a reaction that is generated between the extension part 420 and the trap member 620 to the neck part 501. The motor boss 641 may be relatively rotated with respect to the neck part 501 when the second parking body 610 is rotated.

FIG. 9 is an enlarged view illustrating a modified example of the distribution member illustrated in FIG. 8.

Referring to FIG. 9, the distribution member 640 may include a case boss 642.

The case boss 642 may be extended from the second parking body 610 toward the case 100, for example, the case cover 120. The length direction of the case boss 642 may be parallel to the length direction of the second output shaft 510. The case boss 642 may be inserted into the case cover 120. The outside of the case boss 642 may come into contact with the inside of the case cover 120. Accordingly, when the extension part 420 and the trap member 620 are trapped and coupled, the case boss 642 can prevent the bending of the second output shaft 510 or damage to the second output shaft 510 by distributing a reaction that is generated between the extension part 420 and the trap member 620 to the case 100. The case boss 642 is not limited to such contents, and may be inserted into the case body 110 depending on the location of the second motor 500. The case boss 642 may be relatively rotated with respect to the case 100 when the second parking body 610 is rotated.

The case boss 642 may be provided in a plural number. The plurality of case bosses 642 may be arranged on a circumference around the second output shaft 510.

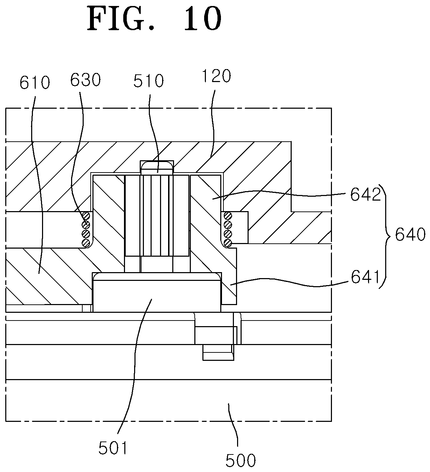

FIG. 10 is an enlarged view illustrating another modified example of the distribution member illustrated in FIG. 8.

Referring to FIG. 10, the distribution member 640 may be constructed to include both the motor boss 641 and the case boss 642. In this case, the motor boss 641 and the case boss 642 may be extended in opposite directions with the second parking body 610 interposed therebetween. For example, in FIG. 9, the motor boss 641 may be downward extended from the second parking body 610, and the case boss 642 may be upward extended from the second parking body 610.

The support member 700 may be disposed to face the second parking member 600 within the case 100. The support member 700 may limit the rotation range of the second parking member 600 in the second rotation direction. That is, the support member 700 may function as a component that limits the second parking body 610 from being rotated at a set angle or more in the second rotation direction by the elastic force of the return member 630.

For example, the support member 700 may protrude from an inner wall surface of the case body 110 toward the second parking body 610. The support member 700 may be disposed to face the first parking member 400 with the second parking body 610 interposed therebetween. The location of the support member 700 may be variously designed and changed within the range of a location where the support member 700 may come into contact with the outside of the second parking body 610 that is rotated in the second rotation direction by the elastic force of the return member 630, after the trap member 620 is separated from the extension part 420. The end of the support member 700 with which the outside of the second parking body 610 comes into contact may be formed to have a curved surface shape. Accordingly, the support member 700 can prevent damage to the second parking body 610 due to the concentration of stress when the support member 700 comes into contact with the second parking body 610.

When the second parking body 610 comes into contact with the support member 700, the return member 630 may maintain the state in which the return member 630 adds rotatory power in the second rotation direction to the second parking member 600. That is, when the second parking body 610 comes into contact with the support member 700, the return member 630 may be installed in the state in which the return member 630 has been compressed or extended in the first rotation direction from the neutral state. Accordingly, when a separate external force is not applied to the second parking body 610, the return member 630 can prevent noise from being generated or the second parking body 610 or the support member 700 from being damaged because the second parking body 610 repeatedly comes into contact with or is separated from the support member 700 due to external vibration.

The initial location of the second parking body 610 may mean that the second parking body 610 has come into contact with the support member 700.

The first parking body 410 may be installed to reciprocate and move in the length direction of the first output shaft 210. For example, the inner circumferential surface of the first parking body 410 may be spline-coupled to the outer circumferential surface of the first output shaft 210.

A side surface of the extension part 420 may be inclined with respect to the length direction of the first output shaft 210. For example, the extension part 420 may be formed to have a cross section that is downward narrowed in FIG. 5.

A side surface of the trap member 620 may be formed in parallel to the length direction of the first output shaft 210. On the contrary, the side surface of the trap member 620 may be inclined with respect to the length direction of the first output shaft 210. In this case, the side surface of the trap member 620 may be formed at an angle corresponding to the slant of the side surface of the extension part 420 so that the side surface of the trap member 620 comes into contact with the side surface of the extension part 420.

Some of a reaction that acts between the extension part 420 and the trap member 620 may be transferred in a direction parallel to the length direction of the first output shaft 210 due to the slant angle of the side surface of the extension part 420. In this case, when the reaction that acts between the extension part 420 and the trap member 620 is greater than a set size or more, the first parking body 410 may be moved in a straight line in a departure direction that is parallel to the length direction of the first output shaft 210. When the first parking body 410 is moved in the departure direction, the extension part 420 may fall outside from the trap member 620. For example, the departure direction may mean an upward direction in FIG. 5. Accordingly, if the second parking body 610 is not rotated smoothly in the second rotation direction due to the trapping of the extension part 420 and the trap member 620 or damage to the return member 630, the extension part 420 may be separated from the trap member 620 by the forced rotation of the first output shaft 210.

The brake actuator 30 may further include a restoration member 800.

The restoration member 800 may move the first parking body 410 in a direction opposite to the departure direction after the first parking body 410 is moved in the departure direction. Accordingly, the restoration member 800 can prevent parking braking maintenance performance of the brake actuator 30 from being permanently lost by restoring the first parking body 410 to its initial location after the extension part 420 and the trap member 620 are forcedly separated from each other.

The restoration member 800 may include a restoration body 810 and an elastic member 820.

The restoration body 810 may be spaced apart from the first parking body 410 in the direction parallel to the length direction of the first output shaft 210. For example, the restoration body 810 may be formed to have a circular plate shape that is extended in the radial direction of the first output shaft 210 from the circumferential surface of the first output shaft 210. The bottom of the restoration body 810 may be disposed to face the top of the first parking body 410. In contrast, the top of the restoration body 810 may face the bottom of the first parking body 410.

The elastic member 820 may be provided to be elastically deformable in a direction parallel to the length direction of the first output shaft 210. For example, the elastic member 820 may be exemplified as a compression spring that is elastically deformable in the length direction thereof. The length direction of the elastic member 820 may be parallel to the length direction of the first output shaft 210. The central axis of the elastic member 820 may be placed on the same axis as the central axis of the first output shaft 210. Both ends of the elastic member 820 may come into contact with surfaces of the restoration body 810 and the first parking body 410 that face each other, respectively.

When the first parking body 410 is placed at its initial location, the elastic member 820 may be installed in a neutral state in which the elastic member 820 is not extended or compressed. When the first parking body 410 is moved in the departure direction, the elastic member 820 may accumulate elastic energy while being extended or compressed in the length direction. After the extension part 420 and the trap member 620 are forcedly separated from each other, the elastic member 820 may return the first parking body 410 to its initial location by pressurizing or advancing the first parking body 410 in the direction opposite to the departure direction by using elastic energy that has been accumulated in the elastic member 820. When the first parking body 410 is rotated in the first rotation direction, the initial location of the first parking body 410 may be variously designed and changed within the range of a location where the trap member 620 can be inserted between the pair of extension parts 420 that neighbors each other.

An example in which the first parking body 410 is installed to be capable of reciprocating and moving in the length direction of the first output shaft 210 has been described above, but the present disclosure is not limited thereto. The second parking body 610 may be installed to be capable of reciprocating and moving in the length direction of the second output shaft 510.

In this case, the restoration member 800 may be installed to have a location and structure in which the restoration member 800 can pressurize the second parking body 610 in the direction opposite to the departure direction.

The brake actuator 30 may further include a control module.

The control module is connected to the first motor 200 and the second motor 500, and controls operations of the first motor 200 and the second motor 500. More specifically, the control module may control operations of the first motor 200 and the second motor 500 based on a braking signal or braking release signal that is generated by a brake pedal manipulation or parking braking command of a user. The control module is electrically connected to the first motor 200 and the second motor 500, and may be implemented with an integrated circuit (IC), a microcontroller (pC), a microprocessor, or an application-specific integrated circuit (ASIC), which can control whether to rotate the first output shaft 210 and the second output shaft 510 and the rotation speeds of the first output shaft 210 and the second output shaft 510, or a combination of them. The control module may control the rotation directions of the first output shaft 210 and the second output shaft 510 only in one direction by an on/off operation. On the contrary, the control module may control the rotation directions of the first output shaft 210 and the second output shaft 510 in both directions through a plurality of circuits. The control module may be disposed within the case 100. On the contrary, the control module may be coupled to the outside of the case 100.

Hereinafter, an operation of the brake actuator 30 according to an embodiment of the present disclosure is described.

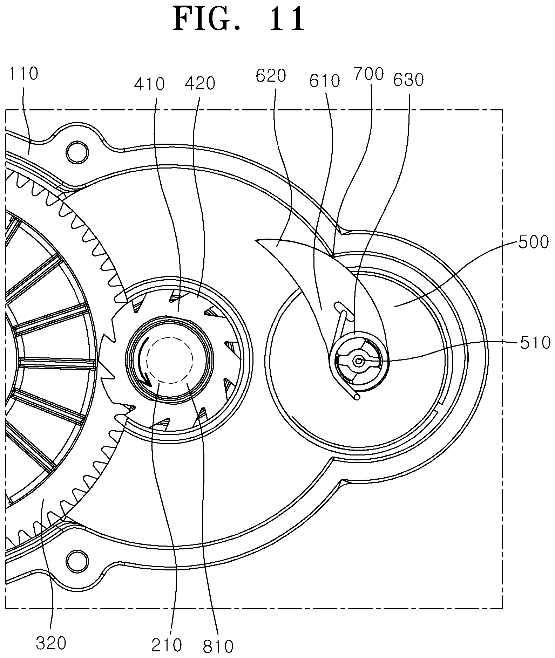

FIGS. 11 to 13 are diagrams schematically illustrating a process of generating a parking braking force.

Referring to FIGS. 11 to 13, upon parking braking, the first motor 200 may rotate the first output shaft 210 in the braking application direction (i.e., counterclockwise in FIG. 11) in the state in which the second parking body 610 has been placed at its initial location.

When the first output shaft 210 is rotated in the braking application direction, the rotatory power of the first output shaft 210 is transferred to the piston unit 20 through the transfer gear 300. The brake pad P is brought into contact with the brake disk D, so that a braking force for a vehicle may be generated.

In this case, the first parking member 400 may be rotated in the braking application direction along with the first output shaft 210.

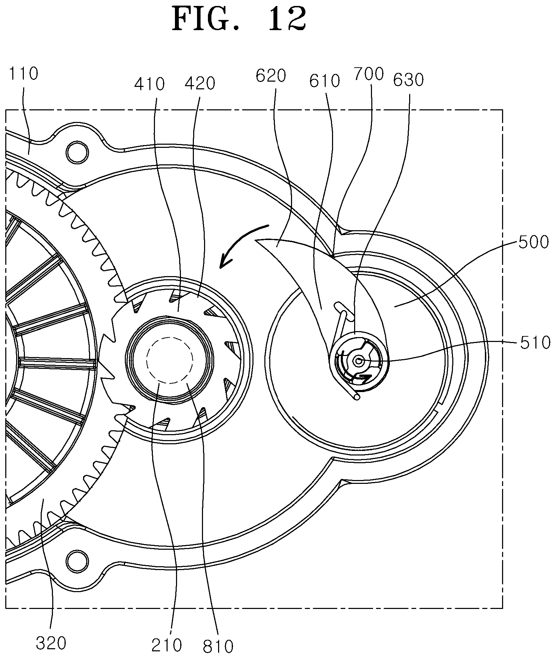

Thereafter, the second motor 500 may rotate the second output shaft 510 in the first rotation direction (i.e., counterclockwise in FIG. 12).

When the second output shaft 510 is rotated in the first rotation direction, the second parking body 610 is rotated in the first rotation direction along with the second output shaft 510. The trap member 620 is moved toward the first parking member 400.

When the second parking body 610 is rotated at a set angle or more in the first rotation direction, the trap member 620 may be inserted between a pair of extension parts 420 that neighbors each other.

The return member 630 is elastically deformed as the second parking body 610 is rotated in the first rotation direction, and may accumulate elastic energy for rotating the second parking body 610 in the second rotation direction.

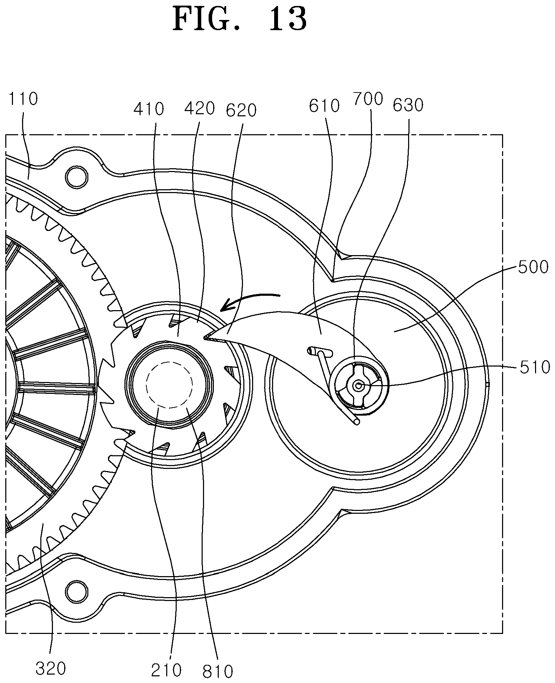

Thereafter, the operation of the first motor 200 is suspended. Rotatory power in the braking release direction (i.e., clockwise in FIG. 13) is applied to the first output shaft 210 by a reaction that acts between the brake disk D and the brake pad P.

The extension part 420 and the trap member 620 are trapped and coupled by the rotatory power in the braking release direction, which is applied to the first output shaft 210.

Thereafter, the rotatory power in the braking release direction, which is applied to the first output shaft 210, is offset by a reaction between the extension part 420 and the trap member 620, and the rotation of the first parking body 410 and the first output shaft 210 is limited. Accordingly, the parking braking state can be maintained.

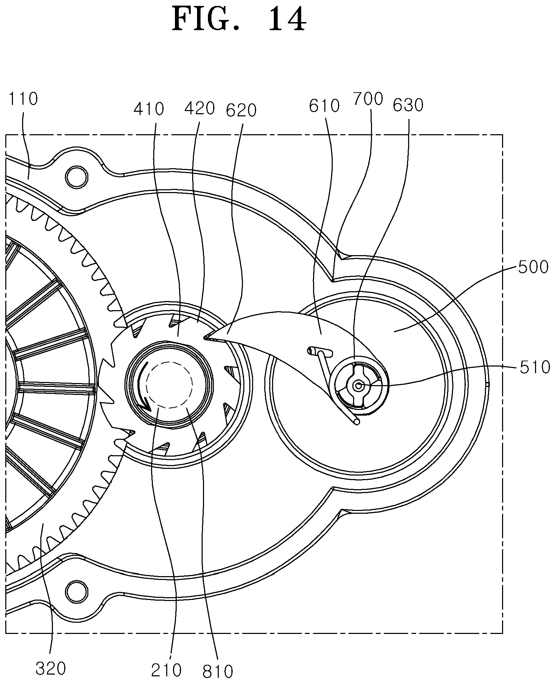

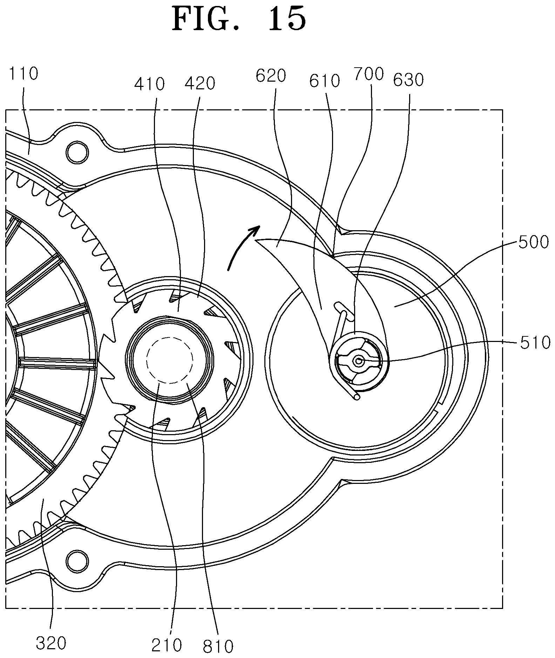

FIGS 14 and 15 are diagrams schematically illustrating a process of releasing a parking braking force.

Referring to FIGS. 1 to 15, when parking braking is released, in the state of FIG. 12, the first motor 200 may rotate the first output shaft 210 at a predetermined angle in the braking application direction (i.e., counterclockwise in FIG. 14).

When the first output shaft 210 is rotated in the braking application direction, the size of a reaction that acts between the extension part 420 and the trap member 620 is reduced.

Due to the reduction of the reaction, the second parking body 610 may be rotated in the second rotation direction (i.e., clockwise in FIG. 14) by elastic energy that is accumulated by the elastic deformation of the return member 630.

When the second parking body 610 is rotated in the second rotation direction, the trap member 620 falls outside from a pair of extension parts 420 that neighbors each other, and the rotation of the first parking body 410 and the first output shaft 210 is permitted.

When the second parking body 610 is rotated at a set angle or more in the second rotation direction, the second parking body 610 comes into contact with the support member 700, and the rotation of the second parking body 610 in the second rotation direction may be suspended.

Thereafter, the first output shaft 210 is rotated in the braking release direction (i.e., clockwise in FIG. 15), and the parking braking force may be released.

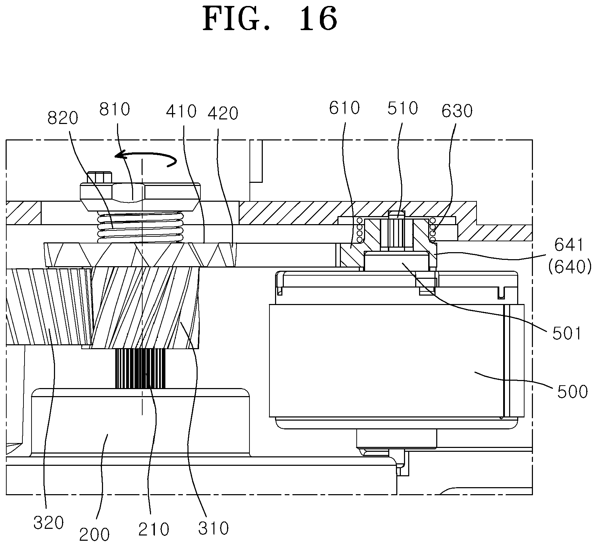

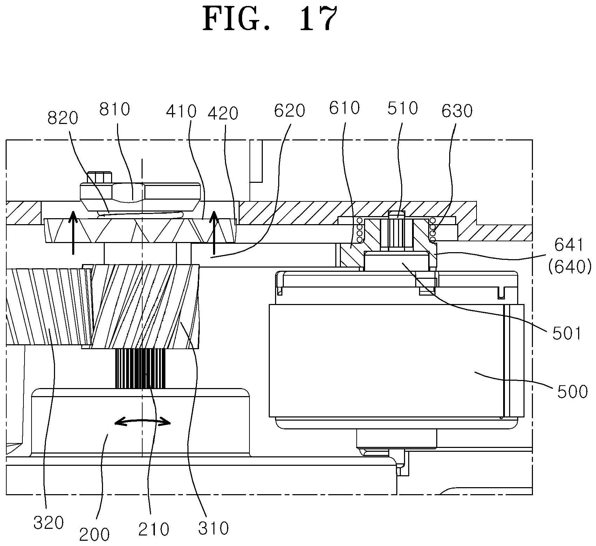

FIGS. 16 and 17 are diagrams schematically illustrating a process of forcedly releasing a parking braking force.

Referring to FIGS. 1 to 17, if the first output shaft 210 is not rotated in the braking application direction (i.e., counterclockwise in FIG. 15) or the second parking body 610 is not rotated in the second rotation direction (i.e., clockwise in FIG. 15) due to the trapping of the extension part 420 and the trap member 620 or damage to the return member 630, the first motor 200 forcedly rotates the first output shaft 210 in the braking release direction (i.e., clockwise in FIG. 15).

When the first output shaft 210 is rotated in the braking release direction, the size of a reaction that acts between the extension part 420 and the trap member 620 is increased.

Some of the reaction that acts between the extension part 420 and the trap member 620 is transferred in the direction parallel to the length direction of the first output shaft 210 by the slant angle of the side surface of the extension part 420.

When the size of the reaction that acts between the extension part 420 and the trap member 620 is a set size or more, the first parking body 410 is moved in a straight line in the departure direction (i.e., upward in FIG. 17) parallel to the length direction of the first output shaft 210.

The extension part 420 is relatively moved in the length direction of the first output shaft 210 with respect to the trap member 620. The extension part 420 and the trap member 620 may be separated from each other.

In this process, the elastic member 820 is elastically deformed in the length direction of the first output shaft 210, and accumulates elastic energy for returning the first parking body 410 to its initial location.

Thereafter, when the second parking body 610 is returned to its initial location by the elastic restoring force of the return member 630, the driving force of the second motor 500, or manually, the first parking body 410 is moved in the direction (i.e., downward in FIG. 17) opposite to the departure direction, and may be returned to its initial location.

Although exemplary embodiments of the present disclosure have been disclosed for illustrative purposes, those skilled in the art will appreciate that various modifications, additions and substitutions are possible, without departing from the scope and spirit of the present disclosure as defined in the accompanying claims.

Thus, the true technical scope of the present disclosure should be defined by the following claims.

## Claims

1. A brake actuator comprising:
a case;
a first motor installed in the case;
a transfer gear rotatably installed in the case and connected to the first motor;
a first parking member rotated along with the transfer gear;
a second motor disposed to be spaced apart from the first motor;
a second parking member connected to the second motor and configured to limit the rotation of the first parking member as the second parking member is rotated in a first rotation direction; and
a support member disposed to face the second parking member and configured to limit a rotation range of the second parking member in a second rotation direction that is opposite to the first rotation direction.

2. The brake actuator of claim 1, wherein the first parking member comprises:
a first parking body connected to a first output shaft of the first motor; and
a plurality of extension parts extended from the first parking body and arranged along a circumferential surface of the first parking body.

3. The brake actuator of claim 2, wherein the extension part is inclined with respect to a radial direction of the first parking body.

4. The brake actuator of any one of claims 1 to 3, wherein the second parking member comprises:
a second parking body connected to a second output shaft of the second motor and rotated in the first rotation direction or the second rotation direction;
a trap member extended from the second parking body and inserted between the extension parts that neighbor each other as the second parking body is rotated in the first rotation direction; and
a return member connected to the second parking body and configured to add rotatory power in the second rotation direction to the second parking body.

5. The brake actuator of claim 4, wherein the return member adds rotatory power in the second rotation direction to the second parking member when the second parking member comes into contact with the support member.

6. The brake actuator of claim 4 or 5, wherein the return member is provided to be elastically deformable.

7. The brake actuator of any one of claims 4 to 6, wherein the return member is a torsion spring.

8. The brake actuator of any one of claims 4 to 7, wherein the second parking member further comprises a distribution member provided in the second parking body.

9. The brake actuator of claim 8, wherein:
the second motor comprises a neck part disposed to surround the second output shaft, and
the distribution member comprises a motor boss extended from the second parking body and disposed to surround the neck part.

10. The brake actuator of claim 8 or 9, wherein the distribution member comprises a case boss extended from the second parking body and inserted into the case.

11. The brake actuator of any one of claims 4 to 10, wherein the support member protrudes from the case and comes into contact with the second parking body when the second parking body is rotated at a set angle or more in the second rotation direction.

12. The brake actuator of any one of claims 1 to 11, wherein an end of the support member has a curved surface shape.

13. The brake actuator of any one of claims 4 to 12, wherein:
the first parking body is movably installed in a length direction of the first output shaft, and
when weight that acts between the extension part and the trap member is a set size or more, the first parking body is moved in a departure direction parallel to a length direction of the first output shaft.

14. The brake actuator of any one of claims 1 to 13, wherein the restoration member comprises:
a restoration body disposed to face the first parking body; and
a pressurization member disposed between the restoration body and the first parking body and provided to be elastically deformable.

15. A brake apparatus comprising
a caliper body;
a piston unit movably installed in the caliper body and configured to come into contact with or to be separated from the brake pad in a moving direction thereof; and
a brake actuator connected to the piston unit and configured to move the piston unit,
wherein the brake actuator comprises:
a case;
a first motor installed in the case;
a transfer gear rotatably installed in the case and connected to the first motor and the piston unit;
a first parking member rotated along with the transfer gear;
a second motor disposed to be spaced apart from the first motor;
a second parking member connected to the second motor and configured to limit the rotation of the first parking member as the second parking member is rotated in a first rotation direction; and
a support member disposed to face the second parking member and configured to limit a rotation range of the second parking member in a second rotation direction that is opposite to the first rotation direction.
